# EUROPÄISCHE PATENTANMELDUNG

(11) **EP 1 329 900 A1**
(43) Veröffentlichungstag der Anmeldung: **23.07.2003**
(21) Anmeldenummer: 02102802.2
(22) Anmeldetag: 18.12.2002
(51) Int. Cl.: G11C 17/14, H01L 21/8246, G07F 7/10, H01L 27/118, G06K 19/06

(54) **Verfahren und Anordnung zur Herstellung von maskenprogrammierten ROMS unter Verwendung einer mehrere maskenprogrammierte ROM Systeme umfassenden Lithographie-Maske sowie ein entsprechendes Computerprogrammprodukt und ein entsprechendes computerlesbares Speichermedium**

(30) Priorität: 19.12.2001 DE 10162307
(71) Anmelder: Philips Intellectual Property & Standards GmbH, 20099 Hamburg (DE); Koninklijke Philips Electronics N.V., 5621 BA Eindhoven (NL)
(72) Erfinder: Müller, Detlef, 52088, Aachen (DE)
(74) Vertreter: Volmer, Georg, Dipl.-Ing.

(57) **Zusammenfassung**

Die Erfindung betrifft ein Verfahren und eine Anordnung zur Herstellung von maskenprogrammierten ROMs unter Verwendung einer mehrere Systeme umfassenden Maske sowie ein entsprechendes Computerprogrammprodukt und ein entsprechendes computerlesbares Speichermedium, die insbesondere genutzt werden können, um durch die Individualisierung der ROM-Code-Masken bei der Herstellung von ROMs mit sicherheitsrelevanten Daten den Schutz gegen Hacker-Attacken zu optimieren.

In Smart Card Controllern werden zur Absicherung gegen unbefugtes Auslesen Verschlüsselungen durchgeführt. Ein optimaler Schutz ergibt sich, wenn pro Chip unterschiedliche Schlüssel verwendet werden, da dann selbst bei erfolgreicher Entschlüsselung eines Devices alle anderen immer noch geschützt sind.

Im Produktionsprozeß befinden sich mehrere Systeme gleichzeitig auf einer physikalischen Maske. Alle Systeme auf der physikalischen ROM-Maske enthalten derzeit denselben ROM-Code und denselben Schlüssel. Wenn man bei der Fertigung der ROM-Maske für jedes einzelne System einen individuellen Schlüssel berechnet, erhält man Produkte, bei denen trotz gleichem (logischem) ROM-Code verschiedene Schlüssel existieren, was die Schutzwirkung der ROM-Verschlüsselung steigert.

## Beschreibung

Die Erfindung betrifft ein Verfahren und eine Anordnung zur Herstellung von maskenprogrammierten ROMs unter Verwendung einer mehrere Systeme umfassenden Maske sowie ein entsprechendes Computerprogrammprodukt und ein entsprechendes computerlesbares Speichermedium, die insbesondere genutzt werden können, um durch die Individualisierung der ROM-Code-Masken bei der Herstellung von ROMs mit sicherheitsrelevanten Daten den Schutz gegen das Ausspähen dieser geheimen Informationen zu optimieren. Da Smartcards als Speicher für solche sicherheitsrelevante Informationen dienen, liegt hier ein spezielles Einsatzgebiet der Erfindung

Die Entwicklung der Mikroelektronik in den 1970er Jahren ermöglichte es, kleine Computer im Kreditkartenformat ohne Benutzungsschnittstelle herzustellen. Solche Computer werden als Smartcards bezeichnet. In einer Smartcard sind Datenspeicher und arithmetisch-logische Einheit in einem einzigen Chip von wenigen Quadratmillimetern Größe integriert. Smartcards werden insbesondere als Telefonkarten, GSM-SIM-Karten, im Bankenbereich und im Gesundheitswesen eingesetzt. Die Smartcard ist damit zur allgegenwärtigen Rechenplattform geworden.

Smartcards werden derzeit vornehmlich als sicherer Aufbewahrungsort für geheime Daten und als sichere Ausführungsplattform für kryptographische Algorithmen betrachtet. Die Annahme einer relativ hohen Sicherheit der Daten und Algorithmen auf der Karte liegt im Hardwareaufbau der Karte und den nach außen geführten Schnittstellen begründet. Die Karte stellt sich nach außen als "Black Box" dar, deren Funktionalität nur über eine wohldefinierte Hardware- und Softwareschnittstelle in Anspruch genommen werden kann, und die bestimmte Sicherheitspolicies erzwingen kann. Zum einen kann der Zugriff auf Daten an bestimmte Bedingungen geknüpft werden Kritische Daten, wie zum Beispiel geheime Schlüssel eines Public-Key-Verfahrens, können dem Zugriff von außen sogar völlig entzogen werden. Zum anderen ist eine Smartcard in der Lage, Algorithmen auszuführen, ohne dass die Ausführung der einzelnen Operationen von außen beobachtet werden kann. Die Algorithmen selbst können auf der Karte vor Veränderung und Auslesen gsschützt werden. Im objektorientierten Sinn läßt sich die Smartcard als abstrakter Datentyp auffassen, der über eine wohldefinierte Schnittstelle verfügt, ein spezifiziertes Verhalten aufweist und selbst in der Lage ist, die Einhaltung bestimmter Integritätsbedingungen bezüglich seines Zustandes sicherzustellen.

Es gibt im Wesentlichen zwei verschiedene Typen von Smartcards. Speicherkarten besitzen lediglich eine serielle Schnittstelle, eine Adressierungs- und Sicherheitslogik und ROM- und EEPROM-Speicher. Diese Karten besitzen nur eingsschränkte Funktionalität und dienen einer spezifischen Anwendung. Dafür sind sie besonders billig herzustellen. Als Mikroprozessorkarten hergestellte Smartcards stellen im Prinzip einen vollständigen Universalrechner dar.

Der Herstellungs- und Auslieferungsprozess für Chipkarten gliedert sich in folgende Phasen:
- Herstellen des Halbleiters,
- Einbetten des Halbleiters,
- Bedrucken der Karte,
- Personalisierung der Karte,
- Ausgeben der Karte.

Im Allgemeinen wird jede Phase von einer auf die jeweilige Arbeit spezialisierten Firma durchgeführt. Beim Herstellen der Halbleiter ist insbesondere bei Karten mit festverdrahteter Sicherheitslogik auf eine gute betriebsinterne Sicherheit zu achten. Damit vom Hersteller ein korrekter Endtest durchgeführt werden kann, muß der komplette Speicher frei zugänglich sein. Erst nach dem Endtest wird der Chip durch einen Transportcode gesichert. Danach ist der Zugriff auf den Kartenspeicher nur für bemchtigte Stellen, die den Transportcode kennen, möglich. Ein Diebstahl fabrikneuer Halbleiter bleibt damit ohne Folgen.

Berechtigte Stellen können Personalisierer beziehungsweise Kartenausgeber sein. Für das Einbetten und Bedrucken sind keine weiteren Sicherungsfunktionen notwendig. Die betreffenden Firmen brauchen den Transportcode nicht zu kennen.

Im Allgemeinen überträgt nicht der Kartenhersteller, sondern die ausgehende Stelle (zum Beispiel Bank, Telefongesellschaft, Krankenkasse etc.) die personenspezifischen Daten in die Karte. Diesen Vorgang nennt man Personalisierung. Für sie ist die Kenntnis des Transportcodes notwendig.

Das Ausgeben der Karte, also der Transport von der ausgebenden Stelle zum Karteninhaber, stellt ein weiteres Sicherheitsproblem dar. Genau gsnommen ist nur die persönliche Ausgabe an den Karteninhaber gegen Unterschrift und Vorlage des Personalausweises sicher. Ein Versand per Post ist zwar oft wirtschaftlicher aber auch ziemlich unsicher. Ein Problem ist auch das Übermitteln der PIN an den Karteninhaber, hier muß die gleiche Sorgfalt wie für die Karte gelten.

Bedingt durch die brisanten, sicherheitsrelevanten Inhalte der auf Smartcard-Controllem befindliche Speicher ist neben der Beachtung dieser Sicherungsmaßnahmen ein zusätzlicher Schutz gegen mögliche Aktivitäten von Hackern zu gewährleisten, die sich auf alle Phasen des Lebenslaufes einer Smartcard - beginnend von der Herstellung, über Transport, Nutzung der Karte bis zu Manipulationen unbrauchbar gewordener Karten - erstrecken.

In der Vergangenheit sind bereits vielfältige Versuche unternommen worden, die bei dem Einsatz insbesondere von Smartcards auftretenden Sicherheitsprobleme durch unbefugten Zugriff auf die sicherheitsrelevanten Speicherinhalte zu reduzieren.

US-Patentschrift 5,991,519 beschreibt einen Sicherheits-Speicher, welcher mehrere Sicherheits-Level aufweist. Der Sicherheits-Speicher umfaßt dabei eine erste Sicherheitszone, zu der nur ein code-geschützter Zugriff möglich ist, wobei eine Kontrolleinrichtung überwacht, ob Zugriffaversuche mit ungültigem Code erfolgen, und nach einer festgelegten Anzahl ungültiger Zugriffsversuche den Zugang verhindern. Weitere Funktionseinheiten, die der Sicherheits-Speicher umfaßt, werden jeweils auf die gleiche Weise geschützt. Durch diese vervielfachten Sicherheitsvorkehrungen gelingt es, den Schutz des entsprechenden Speichers zu erhöhen.

Eine weitere Methode, den unbefugten Zugriff auf Daten zu verhindern, wird in der US 6,094,724 offenbart. Diese Schrift beschreibt zwei Sicherheitsaspekte: zum Ersten wird eine Verschlüsselung angewendet zur Authentifizierung sowohl von Smartcard als auch vom Smartcard-Reader, zum Zweiten erfolgt der Zugriff auf die verschiedenen Funktionseinheiten der Smartcard mit jeweils verschiedenen Verschlüsselungen beziehungsweise Paßwörtern.

Im Produktionsprozeß von Smartcard-Controllern befinden sich je nach Chipgröße immer mehrere Systeme gleichzeitig auf einer physikalischen Maske. Bei gängigen Smartcard-Controllern sind das derzeit zirka 30-50 Stück. Alle Systeme auf der physikalischen ROM-Maske enthalten derzeit denselben ROM-Code und denselben Schlüssel. Eine gängige Methode ist es, die Codierungen beziehungsweise Schlüssel in ROM-Fuses (spezielle ROM Zellen) zu halten. So lassen sich pro ROM-Code unterschiedliche Schlüssel realisieren. Allerdings haben alle Devices eines ROM-Codes immer denselben Schlüssel.

In heutigen Smart Card Controllern wird pro ROM-Code ein Schlüssel gebildet. Dieser Schlüssel ist für alle Devices mit diesem ROM-Code gleich. Dieser Nachteil wird auch nicht durch die oben angeführten Schriften US 5,991,519 und US 6,094,724 behoben. Die von einer Maske hergestellten Systeme haben auch bei Einsatz der dort vorgeschlagenen Verfahren immer noch denselben Schlüssel.

Der Erfindung liegt die Aufgabe zugrunde, ein Verfahren, eine Anordnung sowie ein entsprechendes Computerprogrammprodukt und ein entsprechendes computerlesbares Speichermedium der gattungsgemäßen Art anzugsben, mittels der die beschriebenen Nachteile behoben werden und eine zusätzliche Absicherung von maskenprogrammierten ROMs, die unter Verwendung einer mehrere Systeme umfassenden Maske hergestellt werden, ermöglicht wird.

Erfindungsgemäß wird diese Aufgabe gelöst durch die Merkmale im kennzeichnenden Teil der Ansprüche 1,5,6 und 7 im Zusammenwirken mit den Merkmalen im Oberbegriff. Zweckmäßige Ausgestaltungen der Erfindung sind in den Unteransprüchen enthalten.

Ein besonderer Vorteil der Erfindung liegt darin, dass bei dem Herstellungsverfahren für maskenprogrammierte ROMs unter Verwendung einer mehrere Systeme umfassenden Maske eine Verschlüsselung der mit der Maske hergestellten Systeme derart erfolgt, dass für mindestens zwei der mit der Maske hergestellten Systeme die Verschlüsselung mit verschiedenen Schlüsseln erfolgt.

Eine Anordnung zur Herstellung von maskenprogrammierten ROMs unter Verwendung einer mehrere Systeme umfassenden Maske umfaßt vorteilhafterweise einen Prozessor, der derart eingerichtet ist, dass eine Herstellung von maskenprogrammierbaren ROMs unter Verwendung einer mehrere Systeme umfassenden Maske durchführbar ist, indem eine Verschlüsselung der mit der Maske hergestellten Systeme derart erfolgt, dass für mindestens zwei dieser Systeme die Verschlüsselung mit verschiedenen Schlüsseln erfolgt.

Ein Computerprogrammprodukt zur Herstellung von maskenprogrammierten ROMs unter Verwendung einer mehrere Systeme umfassenden Maske umfaßt vorteilhaft ein computerlesbares Speichermedium, auf dem ein Programm gespeichert ist, das es einem Computer ermöglicht, nachdem es in den Speicher des Computers geladen worden ist, die Herstellung von maskenprogrammierbaren ROMs unter Verwendung einer mehrere Systeme umfassenden Maske durchzuführen, indem eine Verschlüsselung der mit der Maske hergestellten Systeme derart erfolgt, dass für mindestens zwei dieser Systeme die Verschlüsselung mit verschiedenen Schlüsseln erfolgt.

Auf einem erfindungsgemäßen computerlesbaren Speichermedium zur Herstellung von maskenprogrammierten ROMs unter Verwendung einer mehrere Systeme umfassenden Maske ist vorteilhaft ein Programm gespeichert, das es einem Computer ermöglicht, nachdem es in den Speicher des Computers geladen worden ist, die Herstellung von maskenprogrammierbaren ROMs unter Verwendung einer mehrere Systeme umfassenden Maske durchzuführen, indem eine Verschlüsselung der mit der Maske hergestellten Systeme derart erfolgt, dass für mindestens zwei dieser Systeme die Verschlüsselung mit verschiedenen Schlüsseln erfolgt.

In bevorzugter Ausgestaltung der Erfindung ist vorgesehen, dass für alle mit derselben Maske hergestellten Systeme je ein individueller Schlüssel berechnet wird.

In weiterer bevorzugter Ausgestaltung der Erfindung ist vorgesehen, dass die Schlüssel in ROM-Fuses gehalten werden.

Darüber hinaus erweist es sich als vorteilhaft, dass die Verschlüsselung für Adressen und / oder Daten erfolgt.

Die Erfindung wird nachfolgend in einem Ausführungsbeispiel näher erläutert.

In Smart Card Controllern (SCC) werden zur Absicherung von Speicherinhalten gegen unbefugtes Auslesen durch einen Angreifer für alle Speichertypen (RAM, Non-volatile Memory, ROM) Verschlüsselungen von Adressen und Daten durchgeführt. Ein optimaler Schutz ergibt sich unter anderem dann, wenn pro Chip unterschiedliche Schlüssel verwendet werden, da dann selbst bei erfolgreicher Entschlüsselung eines Devices alle anderen immer noch vor Attacken (zum Beispiel gezielte Code Manipulationen) geschützt sind

Wie erwähnt, befinden sich im Produktionsprozeß je nach Chipgröße immer mehrere Systeme gleichzeitig auf einer physikalischen Maske. Alle Systeme auf der physikalischen ROM-Maske (derzeit zirka 30-50 Stück) enthalten somit denselben ROM-Code und denselben Schlüssel. Wenn man bei der Fertigung der ROM-Maske für jedes einzelne System einen individuellen Schlüssel (und damit auch einen individuellen physikalischen ROM-Code) berechnet, erhält man in der Produktion Produkte, bei denen trotz gleichem (logischem) ROM-Code zirka 30-50 verschiedene Schlüssel existieren. Das bedeutet zwar einen gewissen höheren Aufwand bei der Erstellung der ROM-Masken, doch dieser Mehraufwand ist gerechtfertigt, da durch die Anwendung des erfindungsgemäßen Verfahrens die Schutzwirkung der ROM-Verschlüsselung erheblich gesteigert wird Durch die so erreichte Individualisierung der ROM-Code-Masken bei der Herstellung von Smartcard-Controllern erhält man zirka 30-50 verschiedene Schlüssel für denselben (physikalischen) ROM-Code. Hierdurch ergibt sich eine erheblich vergrößerte Schutzwirkung gegen Attacken wie zum Beispiel das Ausspähen dieser geheimen Informationen oder gezielte Code-Manipulationen.

Die Erfindung ist nicht beschränkt auf die hier dargestellten Ausführungsbeispiele. Vielmehr ist es möglich, durch Kombination und Modifikation der gsnannten Mittel und Merkmale weitere Ausführungsvarianten zu realisieren, ohne den Rahmen der Erfindung zu verlassen.

## Patentansprüche

1. Herstellungsverfahren für maskenprogrammierte ROMs unter Verwendung einer mehrere Systeme umfassenden Maske,
**dadurch gekennzeichnet, dass** eine Verschlüsselung der mit der Maske hergestellten Systeme derart erfolgt, dass für mindestens zwei der mit der Maske hergestellten Systeme die Verschlüsselung mit verschiedenen Schlüsseln erfolgt.

2. Verfahren nach Anspruch 1,
**dadurch gekennzeichnet, dass** für alle mit derselben Maske hergestellten Systeme je ein individueller Schlüssel berechnet wird.

3. Verfahren nach einem der vorhergehenden Ansprüche,
**dadurch gekennzeichnet, dass** die Schlüssel in ROM-Fuses gehalten werden.

4. Verfahren nach einem der vorhergehenden Ansprüche,
**dadurch gekennzeichnet, dass** die Verschlüsselung für Adressen und/oder Daten erfolgt.

5. Anordnung mit einem Prozessor, der derart eingerichtet ist, dass eine Herstellung von maskenprogrammierbaren ROMs unter Verwendung einer mehrere Systeme umfassenden Maske durchführbar ist, indem eine Verschlüsselung der mit der Maske hergestellten Systeme derart erfolgt, dass für mindestens zwei dieser Systeme die Verschlüsselung mit verschiedenen Schlüsseln erfolgt.

6. Computerprogrammprodukt, das ein computerlesbares Speichermedium umfasst, auf dem ein Programm gespeichert ist, das es einem Computer ermöglicht, nachdem es in den Speicher des Computers geladen worden ist, die Herstellung von maskenprogrammierbaren ROMs unter Verwendung einer mehrere Systeme umfassenden Maske durchzuführen, indem eine Verschlüsselung der mit der Maske hergestellten Systeme derart erfolgt, dass für mindestens zwei dieser Systeme die Verschlüsselung mit verschiedenen Schlüsseln erfolgt.

7. Computerlesbares Speichermediums auf dem ein Programm gespeichert ist, das es einem Computer ermöglicht, nachdem es in den Speicher des Computers geladen worden ist, die Herstellung von maskenprogrammierbaren ROMs unter Verwendung einer mehrere Systeme umfassenden Maske durchzuführen, indem eine Verschlüsselung der mit der Maske hergestellten Systeme derart erfolgt, dass für mindestens zwei dieser Systeme die Verschlüsselung mit verschiedenen Schlüsseln erfolgt.
